# FASCICULE DE BREVET EUROPEEN

(11) **EP 2 724 907 B1**
(45) Date de publication et mention de la délivrance du brevet: **12.08.2015**
(21) Numéro de dépôt: 13188600.4
(22) Date de dépôt: 14.10.2013
(51) Int. Cl.: B60T 8/17, B64C 25/44

(54) **Système de freinage électromécanique pour aéronef**
Elektromechanisches Bremssystem für ein Luftfahrzeug
Electromechanical brake system for an aircraft

(30) Priorité: 26.10.2012 FR 1260228
(43) Date de publication de la demande: 30.04.2014
(73) Titulaire: Messier-Bugatti-Dowty, 78140 Vélizy-Villacoublay (FR)
(72) Inventeur: Onfroy, Dominique, 78140 VELIZY-VILLACOUBLAY (FR); Lepage, Thomas, 78140 VELIZY-VILLACOUBLAY (FR); Selles, Franck, 78140 VELIZY-VILLACOUBLAY (FR); Ragot, Frédéric, 78140 VELIZY-VILLACOUBLAY (FR)
(74) Mandataire: Parzy, Benjamin Alain

(56) Documents cités:
- EP-A1- 1 679 453
- FR-A1- 2 954 742

## Description

L'invention concerne un système de freinage électromécanique d'aéronef comportant des moyens de commande de freinage et au moins un frein électromécanique équipant au moins une roue freinée de l'aéronef.

### ARRIERE PLAN DE L'INVENTION

Les freins électromécaniques d'un système de freinage d'aéronef comportent classiquement une pile de disques de friction et une pluralité d'actionneurs électromécaniques qui chacun comprennent un poussoir apte à être déplacé au moyen d'un moteur électrique pour appliquer sélectivement un effort de presse sur la pile de disques. Les actionneurs comportent en outre un organe de blocage pour bloquer en position le poussoir.

Ces freins électromécaniques sont généralement prévus pour fonctionner selon trois modes de freinage, appelés ici « mode commandé », « mode de parc » et « mode de protection ».

Dans le mode commandé, activé suite à l'actionnement par un pilote de l'aéronef de pédales de frein ou d'une manette de freinage automatique, des moyens de commande de freinage associés à un frein reçoivent une consigne de freinage commandé et délivrent une puissance électrique au moteur électrique de chaque actionneur du frein pour que l'actionneur génère un effort de presse correspondant à la consigne. Les moyens de commande comprennent par exemple un contrôleur d'actionneurs ou EMAC, pour Electro Mechanical Actuator Controller, et un calculateur de freinage ou EBCU, pour Electronic Braking Control Unit.

Dans le mode de parc, activé suite à l'actionnement par le pilote d'un sélecteur de parc, les moyens de commande délivrent une puissance électrique au moteur électrique de manière à amener le poussoir dans une position dans laquelle il exerce un certain effort de presse, puis activent l'organe de blocage pour bloquer le poussoir, et désactivent le moteur. Le mode de parc est utilisé dans des phases de parking, pour maintenir l'aéronef à l'arrêt lorsque celui-ci doit être immobilisé au sol pendant une certaine période. Compte tenu des variations dimensionnelles des composants du frein (puits de chaleur, tube de couple, plaque de retenue du puits de chaleur, etc.) en fonction de la température, l'effort à maintenir varie au cours du temps et il est nécessaire de prévoir la mise en oeuvre dans les moyens de commande d'une logique d'ajustement permettant d'ajuster la position du poussoir.

Le mode de protection permet de protéger les moteurs électriques des actionneurs en coupant leur alimentation en courant pour éviter que leur température ne devienne trop importante. L'organe de blocage des actionneurs est alors activé et maintient par sa seule action l'effort de presse recherché. Le mode de protection est généralement activé suite à une commande interne au système de freinage, transparente pour le pilote.

Dans les modes de parc et de protection, l'effort de presse est un effort dit « de tenue », c'est-à-dire un effort de presse maintenu par la seule action de l'organe de blocage sur le poussoir.

On constate que les modes de parc et de protection peuvent être utilisés dans des situations particulièrement contraignantes pour les freins.

Il arrive ainsi que le mode de parc soit utilisé pour immobiliser un aéronef au cours de tests de poussée des moteurs de propulsion. L'effort de tenue que l'organe de blocage des actionneurs doit maintenir est alors très important.

Lorsqu'un pilote utilise le mode commandé pour immobiliser un aéronef au niveau d'un point d'arrêt de piste, l'aéronef ayant ses moteurs de propulsion activés, il est possible que la température des moteurs électriques des actionneurs devienne trop importante à cause d'un effort maintenu pendant un temps d'attente important. Le mode de protection est alors activé par le système de freinage, nécessitant un organe de blocage dimensionné pour maintenir cet effort de tenue qui peut être important.

Ces utilisations de l'organe de blocage dans les modes de parc et de protection présentent deux difficultés techniques fréquemment relevées par les concepteurs de systèmes de freinage ou d'actionneurs de frein.

La première difficulté concerne la logique d'ajustement mise en oeuvre lorsque l'aéronef est en phase de parking. Cette logique consiste à commander des ajustements de la position du poussoir. Dans le cas où l'évolution de l'effort de tenue n'est pas connue, les ajustements sont réalisés par l'application d'efforts élevés, ce qui tend à vieillir prématurément les actionneurs.

De plus, les organes de blocage sont bien souvent dimensionnés en fonction de l'effort de presse nécessaire pour immobiliser l'aéronef au niveau d'un point d'arrêt de piste, ou au cours de tests de poussée. Comme ces situations requièrent un effort de tenue beaucoup plus important que celui nécessité par une phase de parking, les organes de blocage sont nettement surdimensionnés par rapport aux besoins habituels d'une phase de parking.

EP 1 679 453 Al divulge un système de freinage élactromagnétique qui comprend deux modes de fonctionnement, à savoir un mode de freinage et un mode de blocage.

### OBJET DE L'INVENTION

L'invention a pour objet de résoudre les difficultés techniques décrites plus tôt.

### RESUME DE L'INVENTION

En vue de la réalisation de ce but, on propose un système de freinage électromécanique d'aéronef comportant des moyens de commande de freinage et au moins un frein électromécanique équipant au moins une roue freinée de l'aéronef, le frein étant équipé d'organes de friction et d'au moins un actionneur électromécanique comportant un poussoir apte à être déplacé au moyen d'un moteur électrique pour appliquer sélectivement un effort de presse sur les organes de friction, l'actionneur comportant en outre un organe de blocage pour bloquer en position le poussoir, les moyens de commande étant adaptés à faire fonctionner le système de freinage au moins dans un mode commandé dans lequel le moteur électrique est commandé pour appliquer sélectivement un effort de presse en réponse à une consigne de freinage, ou dans un mode de parc dans lequel le moteur est commandé pour amener le poussoir dans une position dans laquelle il exerce un effort de parc sur les organes de friction, puis l'organe de blocage est activé et le moteur désactivé. Selon l'invention, les moyens de commande sont adaptés à faire fonctionner le système de freinage dans un mode de freinage supplémentaire ou mode combiné, dans lequel le moteur est activé pour amener le poussoir dans une position dans laquelle il exerce un effort de tenue donné, puis l'organe de blocage est activé, le moteur étant maintenu activé pour permettre au poussoir de développer un supplément d'effort au-delà de l'effort de tenue.

Une action combinée de l'organe de blocage et du moteur permet de générer un effort relativement important, supérieur à l'effort de tenue qu'est capable de maintenir l'organe de blocage seul, ce qui permet d'immobiliser l'aéronef au niveau d'un point d'arrêt de piste ou lors de tests de poussée moteur sans surdimensionner l'organe de blocage ou le moteur électrique (puisque son échauffement est limité).

De plus, en activant le mode combiné en phase de parking, on peut détecter les variations d'effort de presse dues aux variations dimensionnelles du frein en se basant sur l'observation des courants des moteurs électriques, permettant ainsi d'évaluer plus précisément le besoin d'ajuster l'effort de presse. On évite ainsi de procéder à des ajustements de position du poussoir trop importants ou trop fréquents, et on réduit le risque de vieillissement prématuré des actionneurs.

### BREVE DESCRIPTION DES DESSINS

L'invention sera mieux comprise à la lumière de la description qui suit en référence aux figures des dessins annexés parmi lesquelles :
- la figure 1 représente une roue munie d'un frein électromécanique intégré dans un système de freinage de l'invention ;
- la figure 2a représente une consigne d'effort de freinage en fonction du temps ;
- la figure 2b représente un signal d'activation d'un organe de blocage d'un actionneur et le courant consommé par un moteur électrique de l'actionneur en réponse à la consigne de freinage ;
- la figure 2c représente un effort de presse total résultant de l'action combinée du moteur électrique et de l'organe de blocage, ainsi que la contribution à cet effort de presse total du moteur et de l'organe de blocage.

### DESCRIPTION DETAILLEE DE L'INVENTION

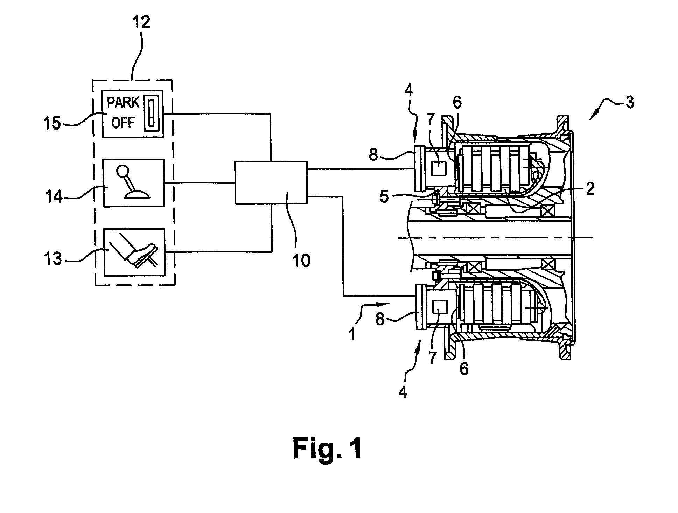

En référence à la figure 1, un frein électromécanique 1 d'un aéronef comporte des organes de friction, ici une pile de disques 2 comprenant en alternance des disques solidaires en rotation de la roue 3 à freiner et des disques fixes en rotation.

Le frein électromécanique 1 comporte de plus une pluralité d'actionneurs 4 (deux sont représentés ici) qui sont portés par un porte-actionneurs 5 pour s'étendre en regard de la pile de disques 2. Chaque actionneur 4 comporte un poussoir 6 apte à être déplacé au moyen d'un moteur électrique 7 vers la pile de disques 2 pour presser celle-ci et ainsi générer un effort de presse, ainsi qu'un organe de blocage 8 permettant de bloquer le poussoir 6 dans une position préalablement établie. Ici, l'organe de blocage 8 est dimensionné pour un usage habituel d'une phase de parking, et n'est pas surdimensionné en prévision d'une utilisation lors de tests de poussée ou lors d'une immobilisation de l'aéronef au niveau d'un point d'arrêt de piste.

Outre les freins électromécaniques semblables au frein 1 équipant les roues freinées de l'aéronef, le système de freinage de l'invention comporte des moyens de commande de freinage 10 permettant de commander les actionneurs des freins.

Le système de freinage selon l'invention est prévu pour fonctionner selon au moins quatre modes de freinage :
- un mode de freinage dit « mode commandé » ;
- un mode de freinage dit « mode de parc » ;
- un mode de freinage dit « mode de protection » ;
- un mode de freinage dit « mode combiné ».

Dans le mode commandé, les moyens de commande 10 reçoivent une instruction de freinage émise suite à l'actionnement par le pilote depuis le cockpit 12 de l'aéronef des pédales de freins 13, ou d'une manette dite autobrake 14 commandant un freinage automatique, et émettent une consigne de freinage. Les moyens de commande 10 génèrent et modulent en fonction de cette consigne une puissance électrique à destination du moteur électrique 7 de chaque actionneur 4.

Dans le mode de parc, les moyens de commande 10 reçoivent directement une instruction de freinage de parc émise suite à l'actionnement par le pilote d'un sélecteur de parc 15. Les moyens de commande 10 génèrent alors à destination du moteur électrique 7 de chaque actionneur 4 une puissance électrique, permettant au moteur 7 d'amener le poussoir 6 de l'actionneur dans une position dans laquelle il exerce un effort de parc sur la pile de disques 2. Les moyens de commande 10 activent alors l'organe de blocage 8 de chaque actionneur 4 pour bloquer le poussoir 6 en position, et désactivent le moteur 7. Les moyens de commande 10 recommencent régulièrement ces étapes pour ajuster l'effort de parc, celui-ci pouvant avoir varié du fait des variations dimensionnelles des composants du frein en fonction de la température.

Le mode de protection est activé (lorsque l'aéronef est à l'arrêt) suite à la détection par les moyens de commande 10 que la température d'un ou de plusieurs moteurs électriques 7 dépasse un certain seuil. Les moyens de commande 10 coupent alors l'alimentation des moteurs, et activent les organes de blocage 8 des actionneurs 4 correspondant. Les organes de blocage 8 maintiennent par leurs seules actions l'effort de presse recherché.

On note qu'au cours des freinages réalisés selon ces trois modes, le moteur électrique 7 et l'organe de blocage 8 d'un actionneur 4 ne sont pas commandés de manière à être actifs simultanément, sauf éventuellement au cours de courtes périodes transitoires.

Dans le mode combiné, les moyens de commande 10 reçoivent une instruction de freinage, et génèrent une consigne de freinage combiné. Les moyens de commande 10 activent alors le moteur 7 en lui fournissant une puissance électrique, et le moteur amène le poussoir dans une position dans laquelle il exerce un certain effort de presse. Puis, les moyens de commande 10 activent l'organe de blocage 8 pour que celui-ci bloque le poussoir 6 en position. Le moteur est maintenu activé, de sorte que le poussoir 6 développe, sous l'action combinée du moteur 7 et de l'organe de blocage 8, un effort supplémentaire au-delà de l'effort de tenue exercé par le seul organe de blocage 8, ce qui permet aussi de réduire la consommation électrique du moteur et par conséquent son échauffement.

Le mode combiné est destiné à se substituer au mode de parc et au mode de protection dans des conditions particulières prédéfinies, correspondant à deux besoins principaux :
- permettre de maintenir un effort de presse supérieur à l'effort de maintien de l'organe de parc seul ;
- surveiller les variations d'effort de presse dans les situations où le mode de parc est normalement utilisé (phases de parking, etc.).

L'instruction de freinage combiné est ici générée automatiquement par une commande interne au système de freinage, par exemple suite à:
- une détection d'une commande simultanée du mode de parc et d'une commande de poussée moteur (cette détection correspond par exemple à une situation de test de poussée moteur);
- une détection d'une commande de poussée moteur et d'une température de moteur d'actionneur de frein trop importante (cette détection correspond par exemple à une situation d'immobilisation au niveau d'un point d'arrêt de piste) ;
- une détection d'une commande du mode de parc pour un effort de presse à maintenir supérieur à un seuil (cette détection correspond à une phase de parking dans laquelle l'effort de presse recherché est important).

Dans les situations de test de poussée ou d'immobilisation au niveau d'un point d'arrêt de piste, le mode combiné est utilisé pour appliquer un effort de presse relativement important sur la pile de disques 2, supérieur à un effort de tenue que le dispositif de blocage est capable de maintenir par sa seule action.

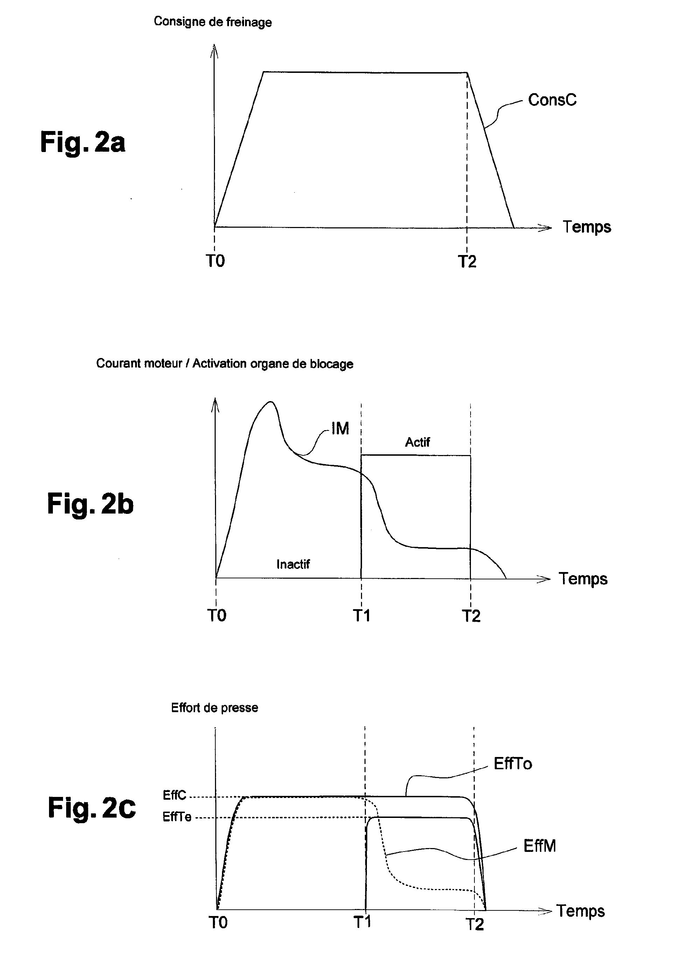

Ainsi, comme cela est visible sur les figures 2a, 2b et 2c, lorsque les moyens de commande 10 reçoivent entre les temps T = T0 et T = T2 une instruction de freinage en mode combiné destinée à commander un effort de presse cible EffC, ils génèrent une consigne de freinage ConsC. A T = T0, les moyens de commande 10 alimentent le moteur 7 en lui fournissant un courant moteur IM. Ce courant moteur IM permet de commander le moteur pour qu'il déplace le poussoir de manière à générer un effort de presse moteur EffM égal à l'effort de presse cible EffC. L'organe de blocage 8, quant à lui, est inactif. L'effort total EffTo, généré par l'action combinée du moteur et de l'organe de blocage, est donc égal à l'effort EffM.

Le moteur 7 est commandé pour maintenir l'effort EffC pendant une certaine durée, jusqu'au temps T = T1. L'organe de blocage 8 est maintenu inactif entre T0 et T1.

Puis, au temps T = T1, l'organe de blocage 8 est activé. L'organe de blocage bloque le poussoir et maintient un effort de tenue EffTe. L'effort de presse EffM généré par le moteur 7 est diminué, et la contribution du moteur à l'effort de presse total EffTo devient relativement faible. L'effort total EffTo est donc égal à la somme des efforts EffTe et EffM.

Ainsi, entre les temps T = T1 et T = T2, l'action combinée du moteur et de l'organe de blocage permet de générer un effort de presse total EffTo égal à l'effort cible EffC supérieur à l'effort de tenue EffTe de l'organe de blocage.

Cet effort de presse cible peut être relativement important et permet d'immobiliser l'aéronef dans une situation de point d'arrêt ou de test de poussée moteur ou de parc sans surdimensionner l'organe de blocage ou le moteur électrique.

Le mode combiné du système de freinage de l'invention est aussi particulièrement intéressant pour mettre en oeuvre une logique d'ajustement de l'effort de parc lorsque l'aéronef est dans une phase de parking.

Cette logique d'ajustement permet d'effectuer exactement le nombre d'ajustements nécessaires pour maintenir un effort de presse cible. En mode combiné, les moyens de commande 10 commandent simultanément l'organe de blocage 8 pour qu'il bloque le poussoir 6 en position et le moteur électrique 7 pour qu'il délivre de manière continue un effort de presse constant. Le moteur 7 est donc alimenté en permanence, ce qui permet, grâce à des acquisitions de mesures du courant consommé par le moteur, d'évaluer les variations de l'effort de presse appliqué par l'actionneur.

En mode combiné pendant la phase de parking, pour commander le moteur 7 de l'actionneur 4, trois seuils de courant Isat, Smin et Smax sont définis.

Le seuil Isat est un seuil de courant permettant de limiter la consommation en courant du moteur 7 pendant la phase de parc. Ce seuil permet ainsi de s'assurer que la consommation électrique ne sera pas trop pénalisante au regard de la capacité de la batterie de l'aéronef utilisée.

Les seuils Smin et Smax sont des seuils de courant utilisés pour déterminer de manière précise les moments où un ajustement de la position du poussoir 6 doit être réalisé. En cas de variations dimensionnelles des composants du frein 1, l'effort de parc à maintenir varie, ce qui se traduit par une variation du courant consommé. Les seuils Smin et Smax sont dimensionnés de sorte qu'un courant consommé par le moteur inférieur à Smin ou supérieur à Smax indique qu'il est nécessaire d'ajuster la position du poussoir 6 pour que l'effort de parc requis soit maintenu entre les bornes acceptables.

La logique d'ajustement du parc est déclenchée par les moyens de commande 10, qui commandent un effort de maintien de parc cible. Pour cela, ils commandent le moteur 7 pour que celui-ci génère un couple de freinage moteur produisant l'effort de presse cible, l'organe de blocage étant alors inactif.

Le moteur 7 maintient alors seul, pendant un court instant, cet effort de presse cible.

Puis, l'organe de blocage 8 est activé et maintient un effort de tenue. Le couple de freinage moteur est réduit mais maintenu, de sorte que l'actionneur produit un effort de presse cible supérieur à l'effort de tenue.

Les seuils de déclenchement Isat, Smin et Smax sont alors activés.

Lorsque le courant consommé par le moteur 7 devient inférieur à Smin ou supérieur à Smax, un ajustement est commandé par les moyens de commande 10. Cet ajustement consiste à débloquer l'organe de blocage 8, à positionner le poussoir 6 dans une position dans laquelle il exerce l'effort de presse cible, puis à réactiver l'organe de blocage 8 tout en continuant à alimenter le moteur 7.

On note que la détection du passage du courant au-dessus du seuil Smax n'est pas activée lorsque l'organe de blocage n'est pas activé.

Cet ajustement est répété pendant toute la phase de parking, pendant la durée où l'alimentation est disponible, à chaque fois que le courant devient inférieur à Smin ou supérieur à Smax.

Comme le moteur électrique 7 est activé en continu dans cette phase de parking, l'effort de presse produit par l'actionneur permet de compenser les faibles variations d'effort de parc. On évite ainsi de procéder à des ajustements avec un niveau trop élevé, ou des ajustements trop fréquents et donc inutiles, et on réduit donc le risque de vieillissement prématuré des actionneurs et la consommation de courant des moteurs.

L'invention n'est pas limitée au mode de réalisation particulier qui vient d'être décrit, mais, bien au contraire, couvre toute variante entrant dans le cadre de l'invention tel que défini par les revendications.

Bien que l'on ait utilisé une architecture simplifiée pour illustrer le système de freinage de l'invention, l'invention couvre bien sûr un système de freinage ayant une architecture différente, à condition que celle-ci comprenne des moyens de commande de freinage contrôlant au moins un actionneur électromécanique comportant un moteur électrique, un poussoir et un organe de blocage. Ainsi, on pourra prévoir d'utiliser des moyens de commande formés d'un ou de plusieurs calculateurs de freinage (EBCU), et d'un ou de plusieurs contrôleurs d'actionneurs (EMAC), de munir les freins d'un nombre quelconque d'actionneurs, etc.

Bien que l'on ait indiqué que le mode combiné est mis en oeuvre automatiquement, suite à une détection par le système de freinage de situations particulières, il aurait été possible de prévoir un organe de commande dans le cockpit permettant au pilote d'activer le mode combiné.

## Revendications

1. Système de freinage électromécanique d'aéronef comportant des moyens de commande de freinage (10) et au moins un frein électromécanique (1) équipant au moins une roue freinée (3) de l'aéronef, le frein (1) étant équipé d'organes de friction (2) et d'au moins un actionneur électromécanique (4) comportant un moteur électrique (7) et un poussoir (6) apte à être déplacé au moyen du moteur électrique (7) pour appliquer sélectivement un effort de presse sur les organes de friction (2), l'actionneur (4) comportant en outre un organe de blocage (8) pour bloquer en position le poussoir (6), les moyens de commande (10) étant adaptés à faire fonctionner le système de freinage au moins dans un mode commandé dans lequel le moteur électrique (7) est commandé pour appliquer sélectivement un effort de presse en réponse à une consigne de freinage, ou dans un mode de parc dans lequel le moteur (7) est commandé pour amener le poussoir (6) dans une position dans laquelle il exerce un effort de parc sur les organes de friction (2), puis l'organe de blocage est activé et le moteur désactivé,
**caractérisé en ce que** les moyens de commande (10) sont adaptés à faire fonctionner le système de freinage dans un mode de freinage supplémentaire ou mode combiné, dans lequel le moteur (7) est activé pour amener le poussoir (6) dans une position dans laquelle il exerce un effort de tenue donné, puis l'organe de blocage (8) est activé, le moteur (7) étant maintenu activé pour permettre au poussoir (6) de développer un supplément d'effort au-delà de l'effort de tenue.

2. Système de freinage selon la revendication 1, **caractérisé en ce que** les moyens de commande (10) sont adaptés à :
- commander le moteur électrique (7) pour amener le poussoir dans une position dans laquelle il exerce un effort de presse cible supérieur à l'effort de tenue, l'organe de blocage (8) étant inactif;
- activer l'organe de blocage (8) pour bloquer le poussoir (6) de l'actionneur électromécanique (4) lorsque le poussoir exerce un effort égal à l'effort de tenue ;
- réduire l'effort généré par le moteur ;
- maintenir le moteur activé pour permettre au poussoir (6) de développer un effort égal à l'effort cible.

3. Système de freinage selon la revendication 1, **caractérisé en ce que** les moyens de commande (10) sont en outre adaptés, en mode combiné, à ajuster la position du poussoir lorsqu'un courant électrique consommé par le moteur électrique (7) devient supérieur à un seuil de courant maximum (Smax) ou inférieur à un seuil de courant minimum (Smin).

4. Système de freinage selon la revendication 3, **caractérisé en ce qu'**un ajustement de la position du poussoir consiste à :
- désactiver l'organe de blocage (8) ;
- commander le moteur électrique (7) pour amener le poussoir dans une position dans laquelle il exerce l'effort de presse cible ;
- activer l'organe de blocage (8) tout en maintenant le moteur activé pour permette au poussoir (6) de développer un effort égal à l'effort cible puis réduire l'effort généré par le moteur.

5. Système de freinage selon l'une des revendications précédentes, **caractérisé en ce que** les moyens de commande sont adaptés à activer le mode combiné par une détection d'une commande simultanée d'un freinage en mode de parc et d'une poussée d'un moteur de propulsion de l'aéronef, ou par détection d'une commande d'un freinage en mode de parc pour générer un effort de presse supérieur à un seuil d'effort prédéfini, ou par une action du pilote sur un organe d'actionnement.

6. Système de freinage selon l'une des revendications précédentes, **caractérisé en ce que** la consommation électrique du moteur (7) est limitée par un seuil de courant prédéfini (Isat).

## Patentansprüche

1. Elektromechanisches Bremssystem für ein Luftfahrzeug, umfassend Bremssteuermittel (10) und mindestens eine elektromechanische Bremse (1), mit der mindestens ein gebremstes Rad (3) des Luftfahrzeugs ausgerüstet ist, wobei die Bremse (1) mit Reibelementen (2) und mindestens einem elektromechanischen Aktor (4) ausgestattet ist, der einen Elektromotor (7) und einen Stößel (6) umfasst, der dazu geeignet ist, mittels des Elektromotors (7) verschoben zu werden, um selektiv eine Anpresskraft auf die Reibelemente (2) auszuüben, wobei der Aktor (4) ferner ein Feststellelement (8) umfasst, um den Stößel (6) in seiner Position festzustellen, wobei die Steuermittel (10) dazu geeignet sind, das Bremssystem mindestens in einem gesteuerten Modus zu betätigen, in dem der Elektromotor (7) gesteuert wird, um selektiv eine Anpresskraft in Antwort auf einen Bremssollwert auszuüben, oder in einem Parkmodus, in dem der Motor (7) gesteuert wird, um den Stößel (6) in eine Position zu bringen, in der er eine Parkkraft auf die Reibelemente (2) ausübt, und dann das Feststellelement aktiviert und der Motor deaktiviert wird,
**dadurch gekennzeichnet, dass** die Steuermittel (10) dazu geeignet sind, das Bremssystem in einem Zusatzbremsmodus oder kombinierten Modus zu betätigen, in dem der Motor (7) aktiviert wird, um den Stößel (6) in eine Position zu bringen, in der er eine gegebene Haltekraft ausübt, und dann das Feststellelement (8) aktiviert wird, wobei der Motor (7) aktiviert bleibt, damit der Stößel (6) eine zusätzliche Kraft über die Haltekraft hinaus entwickeln kann.

2. Bremssystem nach Anspruch 1, **dadurch gekennzeichnet, dass** die Steuermittel (10) dazu geeignet sind:
- den Elektromotor (7) zu steuern, um den Stößel in eine Position zu bringen, in der er eine Zielanpresskraft ausübt, die größer als die Haltekraft ist, wobei das Feststellelement (8) inaktiv ist,
- das Feststellelement (8) zu aktivieren, um den Stößel des elektromechanischen Aktors (4) festzustellen, wenn der Stößel eine Kraft gleich der Haltekraft ausübt,
- die von dem Motor erzeugte Kraft zu reduzieren,
- den Motor aktiviert zu halten, damit der Stößel (6) eine Kraft gleich der Zielkraft entwickeln kann.

3. Bremssystem nach Anspruch 1, **dadurch gekennzeichnet, dass** die Steuermittel (10) ferner im kombinierten Modus dazu geeignet sind, die Position des Stößels anzupassen, wenn ein von dem Elektromotor (7) verbrauchter elektrischer Strom größer als ein maximaler Stromschwellwert (Smax) oder kleiner als ein minimaler Stromschwellwert (Smin) wird.

4. Bremssystem nach Anspruch 3, **dadurch gekennzeichnet, dass** ein Anpassen der Position des Stößels darin besteht:
- Deaktivieren des Feststellelements (8),
- Steuern des Elektromotors (7), um den Stößel in eine Position zu bringen, in der er die Zielanpresskraft ausübt,
- Aktivieren des Feststellelements (8), während man den Motor aktiviert hält, damit der Stößel (6) eine Kraft gleich der Zielkraft entwickeln kann, und daraufhin Reduzieren der von dem Motor erzeugten Kraft,

5. Bremssystem nach einem der vorhergehenden Ansprüche, **dadurch gekennzeichnet, dass** die Steuermittel dazu geeignet sind, den kombinierten Modus durch eine Erfassung eines gleichzeitigen Befehls einer Parkmodusbremsung und eines Schubs eines Antriebsmotors des Luftfahrzeugs oder durch Erfassung eines Befehls einer Parkmodusbremsung, um eine Anpresskraft zu erzeugen, die größer als ein vorgegebener Kraftschwellwert ist, oder durch eine Aktion des Piloten an einem Betätigungselement zu aktivieren.

6. Bremssystem nach einem der vorhergehenden Ansprüche, **dadurch gekennzeichnet, dass** der Stromverbrauch des Motors (7) von einem vorgegebenen Stromschwellwert (Isat) begrenzt ist.

## Claims

1. An aircraft electromechanical braking system comprising braking control means (10) and at least one electromechanical brake (1) fitted to at least one braked wheel (3) of the aircraft, the brake (1) being fitted with friction members (2) and with at least one electromechanical actuator (4) having a pusher (6) suitable for being moved by means of an electric motor (7) in order to selectively apply a pressing force against the friction members (2), the actuator (4) also having a blocking member (8) for blocking the pusher (6) in position, the control means (10) being adapted to cause the braking system to operate at least in a controlled mode in which the electric motor (7) is controlled to selectively apply a pressing force in response to a braking setpoint, or in a parking mode in which the motor (7) is controlled to bring the pusher (6) into a position in which it exerts a parking force on the friction members (2), and then the blocking member is activated and the motor is deactivated,
the system being **characterized in that** the control means (10) are adapted to cause the braking system to operate in an additional braking mode referred to as "combined" mode, in which the motor (7) is activated to bring the pusher (6) into a position in which it exerts a given holding force, and then the blocking member (8) is activated while activation of the motor (7) is maintained in order to enable the pusher (6) to develop an additional force above the holding force.

2. A braking system according to claim 1, **characterized in that** the control means (10) are adapted:
· to control the electric motor (7) to bring the pusher into a position in which it exerts a target pressing force greater than the holding force, the blocking member (8) being inactive;
· to activate the blocking member (8) to block the pusher (6) of the electromechanical actuator (4) when the pusher exerts a force equal to the holding force;
· to reduce the force generated by the motor; and
· to maintain activation of the motor in order to enable the pusher (6) to develop a force equal to the target force.

3. A braking system according to claim 1, **characterized in that** the control means (10) are also adapted, in combined mode, to adjust the position of the pusher when the electric current consumed by the electric motor (7) becomes greater than a maximum current threshold (Smax) or less than a minimum current threshold (Smin).

4. A braking system according to claim 3, **characterized in that** an adjustment in the position of the pusher consists in:
· deactivating the blocking member (8);
· controlling the electric motor (7) to bring the pusher into a position in which it exerts the target pressing force; and
· activating the blocking member (8), while maintaining activation of the motor in order to enable the pusher (6) to develop a force equal to the target force, and then reducing the force generated by the motor.

5. A braking system according to any preceding claim, **characterized in that** the combined mode is activated by detecting a command for braking in parking mode that is simultaneous with thrust from a propulsion engine of the aircraft, or by detecting a command for a parking braking mode to generate a pressing force greater than a predefined force threshold, or by the pilot taking action on an actuator member.

6. A braking system according to any preceding claim, **characterized in that** the electricity consumption of the motor (7) is limited by a predefined current threshold (Isat).
